# EUROPEAN PATENT APPLICATION

(11) **EP 4 795 955 A1**
(43) Date of publication of application: **26.08.2026**
(21) Application number: 26154606.3
(22) Date of filing: 28.01.2026
(51) Int. Cl.: A24F 40/46, A24F 40/485, A24F 40/51, A24F 40/20

(54) **HEATING DEVICE AND ATOMIZATION DEVICE**

(30) Priority: 20.02.2025 CN 202520277135 U
(71) Applicant: Shenzhen Geekvape Technology Co., Ltd., Shenzhen, Guangdong 518100 (CN)
(72) Inventor: YANG, Yangbin, Shenzhen, 518100 (CN); LIU, Caixue, Shenzhen, 518100 (CN)
(74) Representative: Manitz Finsterwald Patent- und Rechtsanwaltspartnerschaft mbB

(57) **Abstract**

The present disclosure provides a heating device and an atomization device. The heating device includes: a support member, where the support member is internally provided with a mounting cavity, the mounting cavity is provided with an insertion end and a closed end oppositely arranged, and the insertion end is provided with an insertion port; and a heating assembly disposed in the mounting cavity, where the heating assembly is internally provided with a heating cavity capable of accommodating an aerosol-generating rod; one end of the heating assembly abuts against the insertion end, the other end of the heating assembly is provided with a ventilation hole communicating the heating cavity with the mounting cavity; and an air inlet is disposed between the insertion end and an end face of the heating assembly that abuts against the insertion end, and the air inlet communicates with the mounting cavity.

## Description

### TECHNICAL FIELD

The present disclosure relates to the technical field of atomization devices, and in particular to a heating device and an atomization device.

### BACKGROUND

Currently, in a common heat-not-burn atomization device, an aerosol-generating rod is inserted into a heating cavity for heating, such that an atomization substrate stored in the aerosol-generating rod is heated and atomized. However, since the atomization substrate is typically concentrated in an area close to a bottom of a support member configured to install a heating assembly, and a heating area of the heating assembly is relatively large and typically covers an area of the aerosol-generating rod close to a top of the support member (where the atomization substrate is typically not stored). During a heating process, part of heat is lost, resulting in low heating efficiency and an excess temperature at the top of the support member, and easily leading to a decrease in service life.

### SUMMARY

To solve the problems of large energy loss, low heating efficiency, and excessive temperature at a top of a support member when an atomization device in the prior art heats an aerosol-generating rod, the present disclosure provides a heating device and an atomization device.

In an embodiment of a technical solution according to a first aspect of the present disclosure, a heating device is provided, including: a support member, where the support member is internally provided with a mounting cavity, the mounting cavity is provided with an insertion end and a closed end oppositely arranged in a first direction, and the insertion end is provided with an insertion port penetrating in the first direction; and a heating assembly, where the heating assembly is disposed in the mounting cavity, and the heating assembly is internally provided with a heating cavity capable of accommodating an aerosol-generating rod, and configured to heat the aerosol-generating rod inserted into the heating cavity; in the first direction, one end of the heating assembly abuts against the insertion end, the insertion port communicates the heating cavity with an external atmosphere, the other end of the heating assembly is provided with a ventilation hole, and the ventilation hole communicates the heating cavity with the mounting cavity; and where an air inlet is disposed between the insertion end and an end face of the heating assembly that abuts against the insertion end, and the air inlet communicates with the mounting cavity.

In a further embodiment of the present disclosure, the heating assembly includes: a heating base, where the heating base is connected to the support member, and the heating base is provided with the ventilation hole; and a heating tube, where the heating tube is disposed in the first direction, one end of the heating tube abuts against the heating base, the heating tube and the heating base enclose to form the heating cavity, the other end of the heating tube abuts against the insertion end, and the heating tube generates heat in an energized state to heat the aerosol-generating rod inserted into the heating cavity; and where an end of the insertion end facing the heating tube is provided with a plurality of first protrusion structures, the plurality of first protrusion structures are arranged at intervals in a circumferential direction and all abut against an end face of the heating tube, and one air inlet is formed between any two adjacent first protrusion structures.

In a further embodiment of the present disclosure, the end of the insertion end facing the heating tube is further provided with a first mounting groove, a side wall of the first mounting groove is located outside the first protrusion structures, and an inner side wall of the first mounting groove is provided with a plurality of second protrusion structures; and where an end of the heating tube facing the insertion end extends into the first mounting groove and abuts against the plurality of first protrusion structures, an outer side wall of the heating tube abuts against the plurality of second protrusion structures, and in the circumferential direction of the first mounting groove, each of the air inlets corresponds to a gap between two adjacent second protrusion structures.

In a further embodiment of the present disclosure, the second protrusion structures are arranged corresponding to the first protrusion structures and connected to the corresponding first protrusion structures in the first direction; and where in the circumferential direction of the first mounting groove, a size of the second protrusion structure is not larger than a size of the corresponding first protrusion structure.

In a further embodiment of the present disclosure, in a direction toward the closed end along the first direction, a flow area of the air inlet gradually increases.

In a further embodiment of the present disclosure, a diameter of the insertion port is larger than an inner diameter of the heating tube; and/or, in the first direction, a diameter of at least a portion of the insertion port gradually increases from inside to outside.

In a further embodiment of the present disclosure, an outer side wall of the heating base is provided with a flange structure arranged in the circumferential direction, and the flange structure abuts against an inner side wall of the support member and divides the mounting cavity into an air intake segment and an air guide segment; the air guide segment is located on a side of the flange structure facing the closed end, and the air intake segment is located on a side of the flange structure facing the insertion end; and where the flange structure is provided with an air guide channel communicating the air intake segment and the air guide segment.

In a further embodiment of the present disclosure, the heating device further includes: a base sealing member, where the base sealing member is disposed in the support member and located on a side of the heating base away from the heating tube, the base sealing member is sealingly connected to the flange structure and the inner side wall of the support member, the base sealing member has a flexible membrane structure, the flexible membrane structure and the heating base enclose to form the air guide segment, and the flexible membrane structure deforms under the action of air pressure; and an airflow sensor, where the airflow sensor is disposed in the support member and located on a side of the flexible membrane structure away from the heating base, the airflow sensor is configured to sense the air pressure change generated when the flexible membrane structure deforms and generate a corresponding sensing signal, and the airflow sensor is configured to be communicatively connected to a power supply assembly.

In a further embodiment of the present disclosure, the support member includes a first support sub-segment and a second support sub-segment sequentially arranged in the first direction, the first support sub-segment is detachably connected to the second support sub-segment, the insertion end is formed at an end of the first support sub-segment away from the second support sub-segment, the closed end is formed at an end of the second support sub-segment away from the first support sub-segment, an outer end face of the closed end is provided with a connecting structure, and the connecting structure is configured to connect and fix a bracket structure of the atomization device; and/or, the heating device further includes a fixing sleeve, the fixing sleeve is connected to the insertion end of the support member and communicates with the insertion port, an inner side wall of the fixing sleeve is provided with contact structures, and the contact structures are configured to abut against a side wall of the aerosol-generating rod inserted into the heating cavity.

In an embodiment of a technical solution according to a second aspect of the present disclosure, an atomization device is provided, including: a housing, where an end of the housing in the first direction is provided with an assembly port; the heating device according to any one of the embodiments of the first aspect, where the heating device is disposed in the housing, and the insertion port of the heating device is arranged corresponding to the assembly port; and a power supply assembly, where the power supply assembly is disposed in the housing and electrically connected to the heating assembly of the heating device.

The beneficial effects of the above technical solution of the present disclosure are as follows:
The heating device in the present disclosure is structurally improved and optimized, such that an external airflow enters the mounting cavity through the air inlet after entering the insertion port, and recovers part of heat during the flow to the heating cavity for heating the aerosol-generating rod, which reduces energy consumption, improves heating efficiency, and reduces the temperature of the insertion end of the support member, thereby extending the service life.

### BRIEF DESCRIPTION OF DRAWINGS

FIG. 1 is a perspective view of a heating device in an embodiment of the present disclosure.
FIG. 2 is a perspective view of a heating device in an embodiment of the present disclosure from another perspective.
FIG. 3 is a semi-sectional view of a heating device in an embodiment of the present disclosure.
FIG. 4 is a semi-sectional view of a heating device in an embodiment of the present disclosure (in a state where an aerosol-generating rod is installed).
FIG. 5 is a semi-sectional view of a heating device in an embodiment of the present disclosure (in a state where a heating tube is hidden).
FIG. 6 is a bottom view of a first support sub-segment in an embodiment of the present disclosure.
FIG. 7 is a partial schematic diagram of an internal structure of a support member in an embodiment of the present disclosure.
FIG. 8 is an exploded view of a heating device in another embodiment of the present disclosure.
FIG. 9 is an exploded view of the heating device in FIG. 8 from another perspective.
FIG. 10 is a perspective view of an atomization device in an embodiment of the present disclosure (in a state where an aerosol-generating rod is installed).
FIG. 11 is a top view of an atomization device in an embodiment of the present disclosure.
FIG. 12 is a semi-sectional view of an atomization device in an embodiment of the present disclosure.
FIG. 13 is a schematic view of a local area in FIG. 12.

In the above drawings, the arrow F1 indicates a first direction, and the dashed arrow indicates an airflow direction.

Reference numerals in the figures:
100-heating device, 1-support member, 11-mounting cavity, 111-air intake segment, 112-air guide segment, 12-insertion end, 121-insertion port, 122-air inlet, 123-first protrusion structure, 124-first mounting groove, 125-second protrusion structure, 13-closed end, 131-connecting structure, 141-first support sub-segment, 142-second support sub-segment, 2-heating assembly, 21-heating cavity, 22-heating base, 221-ventilation hole, 222-flange structure, 223-air guide channel, 224-second mounting groove, 23-heating tube, 31-base sealing member, 311-flexible membrane structure, 312-first insertion slot, 313-second insertion slot, 32-airflow sensor, 33-sensor support, 34-fixing sleeve, 341-contact structure;
400-atomization device, 410-housing, 411-assembly port, 412-bracket structure, 420-power supply assembly, 421-battery, 422-electronic control board; and 500-aerosol-generating rod.

### DETAILED DESCRIPTION

The present disclosure will be further described in detail below with reference to specific embodiments and accompanying drawings. Similar elements in different embodiments are labeled with associated similar element labels. In the following embodiments, more details are described to facilitate clearer understanding of the present disclosure. However, those skilled in the art can readily recognize that some of the features can be omitted in different cases, or can be replaced by other elements, materials, and methods. In some cases, some operations related to the present disclosure are not shown or described in the specification, with the aim of preventing the important part of the present disclosure from being overwhelmed by excessive description, and for those skilled in the art, it is unnecessary to describe these related operations in detail, and they can gain a thorough understanding of the related operations according to the description in the specification and the general technical knowledge in the field.

In addition, the features, operations, or characteristics described in the specification can be combined in any suitable manner to form various embodiments. Operation steps involved in each embodiment can also be sequentially exchanged or adjusted in a manner obvious to those skilled in the art. Therefore, the specification and drawings are merely for clear description of an embodiment, and are not intended to be a necessary composition and/or sequence.

The serial numbers assigned to the components herein, such as "first", "second", are only used to distinguish the described objects, and do not have any sequence or technical meaning. The terms "connection" and "coupling" mentioned herein include direct and indirect connection (coupling), unless otherwise specified.

An aerosol-generating rod is a special atomization product internally containing an atomization substrate, and is inserted into a supporting heat-not-burn atomization device for use, and a heating assembly is configured to heat the aerosol-generating rod, such that the atomization substrate inside the aerosol-generating rod is atomized to generate aerosol. With a user's inhalation action on the aerosol-generating rod, the aerosol moves to an inhalation end along with an airflow.

In a heating device provided by the present disclosure, a heating assembly with a heating cavity is disposed in a support member, where the heating cavity is capable of accommodating the aerosol-generating rod and generating heat in an energized state to heat the aerosol-generating rod inserted into the heating cavity. A ventilation hole is formed at a closed end of a mounting cavity, and an air inlet is disposed between an insertion end of the mounting cavity and an end face of the heating assembly that abuts against the insertion end, where the air inlet communicates with the mounting cavity. When the user performs an inhalation action on the aerosol-generating rod, an external airflow enters through an insertion port of the insertion end, enters the mounting cavity through the air inlet, and then flows into the heating cavity through the ventilation hole at the closed end and be inhaled into the aerosol-generating rod. External air with a relatively low temperature absorbs part of heat from the heating assembly when passing through the insertion end and the mounting cavity, and then carries the absorbed heat into the heating cavity, thereby relatively reducing the temperature of an area of the heating assembly close to the insertion end, achieving energy recovery, reducing energy consumption during heating, and improving heating efficiency. A first direction refers to a height direction of the atomization device, which is the same as the situation in the following embodiments.

Some embodiments of the heating device and the atomization device provided in the present disclosure are described below with reference to the accompanying drawings.

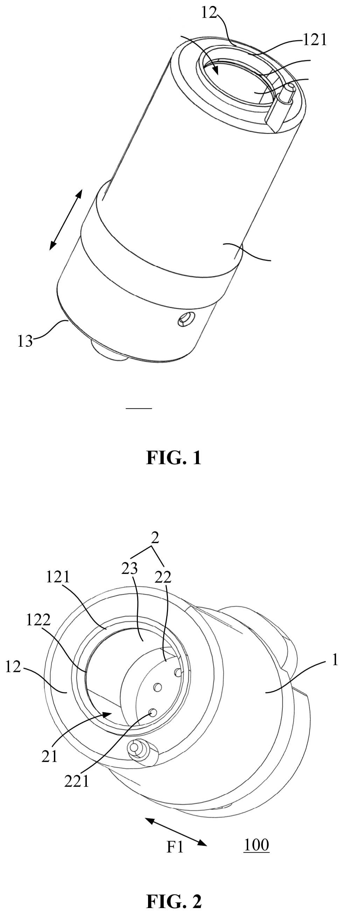

In an embodiment of a first aspect of the present disclosure, a heating device 100 is provided, and as shown in FIGS. 1 to 3, the heating device 100 includes a support member 1 and a heating assembly 2. The support member 1 is internally provided with a mounting cavity 11, and the heating assembly 2 is disposed in the mounting cavity 11, such that the heating assembly 2 is assemble and fixed through the support member 1 when applied in an atomization device. In the first direction, one end of the mounting cavity 11 of the support member 1 is a closed end 13, and the other end of mounting cavity the is an insertion end 12, where the insertion end 12 is provided with an insertion port 121 for an aerosol-generating rod to pass through. The heating assembly 2 is internally provided with a heating cavity 21 capable of accommodating the aerosol-generating rod, and in the first direction, an end of the heating assembly 2 abuts against the insertion end 12 of the support member 1, such that the heating cavity 21 communicates with an external atmosphere through the insertion port 121 of the insertion end 12, and the aerosol-generating rod passes through the insertion port 121 and is inserted into the heating cavity 21; and an end of the heating assembly 2 away from the insertion end 12 is provided with a ventilation hole 221, the ventilation hole 221 communicates the heating cavity 21 with the mounting cavity 11, and an air inlet 122 communicating with the mounting cavity 11 is disposed between the insertion end 12 of the support member 1 and an end face of the heating assembly 2 that abuts against the insertion end.

During use, an end of an aerosol-generating rod 500 passes through the insertion port 121 and is inserted into the heating cavity 21, and when the user performs an inhalation action on the aerosol-generating rod 500, an external airflow sequentially passes through the insertion port 121 and the air inlet 122 to flow into the mounting cavity 11, flows to an end of the heating assembly 2 away from the insertion port 121 in the first direction, then passes through the ventilation hole 221 to enter the heating cavity 21, and is inhaled into the aerosol-generating rod 500 from an end portion of the aerosol-generating rod 500. Meanwhile, the heating assembly 2 heats a portion of the aerosol-generating rod 500 inserted into the heating cavity 21, such that an atomization substrate stored in the aerosol-generating rod 500 is heated and atomized, and moves to the other end of the aerosol-generating rod 500 along with the airflow.

When passing through the air inlet 122 and the mounting cavity 11, external air with a relatively low temperature absorbs part of heat from an area of the heating assembly 2 close to the insertion end 12 and carries the heat into the heating cavity 21 to heat the aerosol-generating rod 500, thereby achieving energy recovery and reducing the temperature of the insertion end 12.

It can be understood that a common aerosol-generating rod has a cylindrical structure, and an atomization substrate is typically stored in the aerosol-generating rod at a position close to a bottom end of the aerosol-generating rod (i.e., an end inserted into the heating cavity). In practical applications, an area of the aerosol-generating rod where the atomization substrate is stored needs to be heated, while the heat demand for a position of the area close to the insertion end of the support member is not high. However, a coverage area of a heating assembly in the prior art is generally large, thereby leading to energy loss caused by heating a position close to the insertion end, where the insertion end is susceptible to aging at high temperature that may shorten the service life.

The heating device 100 in this embodiment is structurally improved and optimized, such that an external airflow enters the mounting cavity 11 through the air inlet 122 after entering the insertion port 121, and recovers part of heat during the flow to the heating cavity 21 for heating the aerosol-generating rod, which reduces energy consumption, improves heating efficiency, and reduces the temperature of the insertion end 12 of the support member 1, thereby extending the service life.

It should be noted that the insertion port 121 is adapted to the aerosol-generating rod 500 in shape and size, such that when the aerosol-generating rod 500 passes through the insertion port 121 and is inserted into the heating cavity 21, a certain gap remains between an inner edge of the insertion port 121 and the aerosol-generating rod 500 for external air to flow in.

In a further embodiment of the present disclosure, as shown in FIGS. 1 to 5, the heating assembly 2 includes a heating base 22 and a heating tube 23. The heating base 22 is connected to the support member 1, the heating tube 23 is disposed in the first direction, one end of the heating tube 23 abuts against the heating base 22, and the other end of the heating tube abuts against the insertion end 12 of the support member 1 to clamp and fix the heating tube 23 through the heating base 22 and the support member 1. The heating tube 23 and the heating base 22 enclose to form the heating cavity 21, and the heating base 22 is provided with the ventilation hole 221 to communicate the heating cavity 21 with the mounting cavity 11 through the ventilation hole 221; an end of the insertion end 12 of the support member 1 facing the heating tube 23 is provided with a plurality of first protrusion structures 123, the plurality of first protrusion structures 123 are arranged at intervals in a circumferential direction of the mounting cavity 11, in the first direction, each of the first protrusion structures 123 abuts against an end face of the heating tube 23, and in the circumferential direction, an air inlet 122 is formed in a space between any two adjacent first protrusion structures 123, that is, a plurality of the air inlets 122 are arranged at intervals in the circumferential direction. The first protrusion structures 123 abut against the end face of the heating tube 23 to form the air inlets 122, such that an external airflow comes into contact with the heating tube 23, the first protrusion structures 123, and the insertion end 12 when passing through the air inlets 122, and the airflow efficiently absorbs the heat in an area where the insertion end is located, thereby lowering the temperature of this area, and bringing the heat absorbed by the airflow into the heating cavity 21. A size of the first protrusion structures 123 in the circumferential direction may be set according to actual use requirements, preferably, the plurality of first protrusion structures 123 are arranged at equal intervals in the circumferential direction, and the airflow passes through the plurality of air inlets 122 and flows into the mounting cavity 11 relatively uniformly, such that heat dissipated by the heating assembly 2 is absorbed in different areas in the circumferential direction, and recovery efficiency is higher.

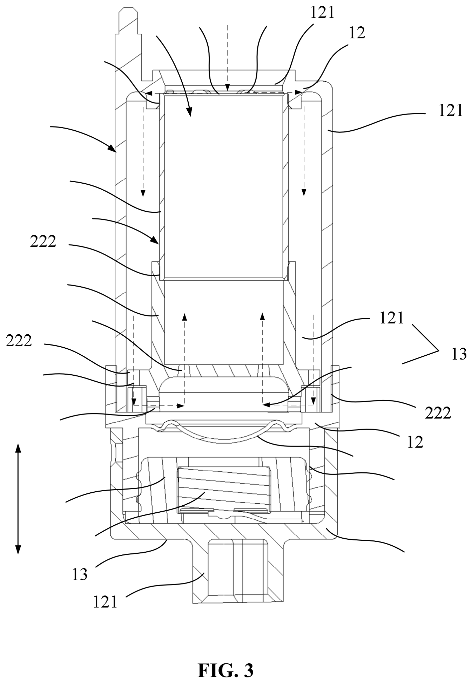

In a further embodiment of the present disclosure, as shown in FIGS. 3 to 6, the end of the insertion end 12 of the support member 1 facing the heating tube 23 is provided with a first mounting groove 124, the first mounting groove 124 is located outside the first protrusion structures 123, and an inner side wall of the first mounting groove 124 extends along the first direction; and an end of the heating tube 23 facing the insertion end 12 extends into the first mounting groove 124, the inner side wall of the first mounting groove 124 is provided with a plurality of second protrusion structures 125, and the plurality of second protrusion structures 125 are arranged at intervals in the circumferential direction and abut against an outer side wall of the heating tube 23 to limit the heating tube 23. In the circumferential direction of the first mounting groove 124, each of the air inlets 122 corresponds to a gap space between two adjacent second protrusion structures 125, such that the external airflow flows into the mounting cavity 11 through the gap space between the second protrusion structures 125 after passing through the air inlets 122. Since the airflow needs to change direction after passing through the air inlets 122, the arrangement of the second protrusion structures 125 ensures that the airflow from different air inlets 122 keeps independent of each other during the direction change, thereby preventing mutual interference, and enhancing the stability of airflow movement.

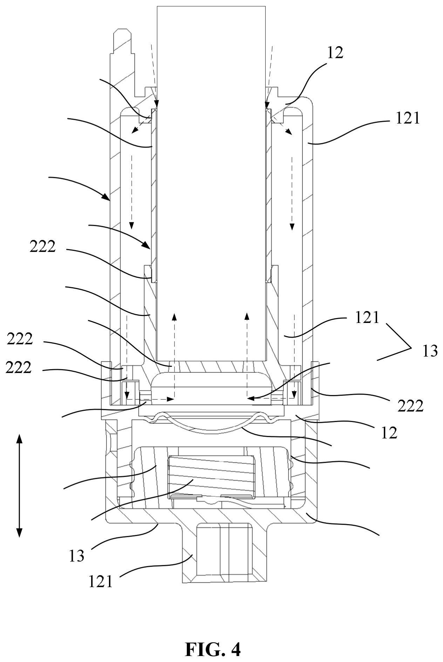

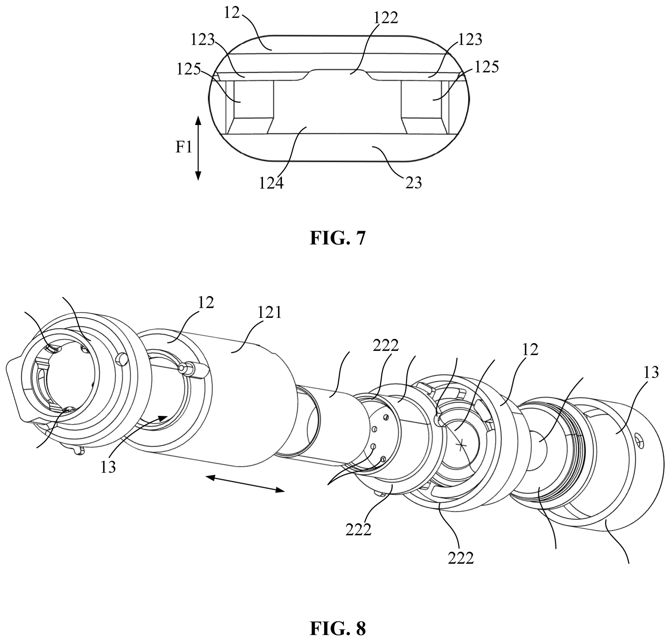

Further, as shown in FIGS. 4 to 6, the second protrusion structures 125 are arranged corresponding to the first protrusion structures 123, and in the first direction, the corresponding second protrusion structure 125 is connected to the first protrusion structure 123 to form a continuous airflow guide channel, which prevents generation of a gap between the two structures, and facilitating processing and molding. In the circumferential direction of the first mounting groove 124, a size of the second protrusion structure 125 is not larger than a size of the corresponding first protrusion structure 123, such that when an airflow enters a gap space between the second protrusion structures 125 from the air inlet 122, the airflow is not be blocked, and a flow area is not reduced, thereby ensuring that the airflow flows to the mounting cavity 11 stably and smoothly. Preferably, as shown in FIG. 8, the size of the second protrusion structures 125 in the circumferential direction is smaller than the size of the first protrusion structure 123 to further expand the airflow channel, which slows down an airflow velocity and enhances the stability of airflow movement.

Further, as shown in FIGS. 4 to 6, the first mounting groove 124 is a circular groove structure adapted to the heating tube 23, and in a direction away from the insertion end 12 along the first direction, the flow area of the air inlet 122 gradually increases to further increase an air intake flow rate. As shown in FIG. 7, a cross-sectional shape of the air inlet 122 may be set as a trapezoid, and the cross-sectional shape of the air inlet 122 may also be set as an arc, such that the flow area of the air inlet 122 gradually increases when the airflow flows from the insertion end 12 to the mounting cavity 11.

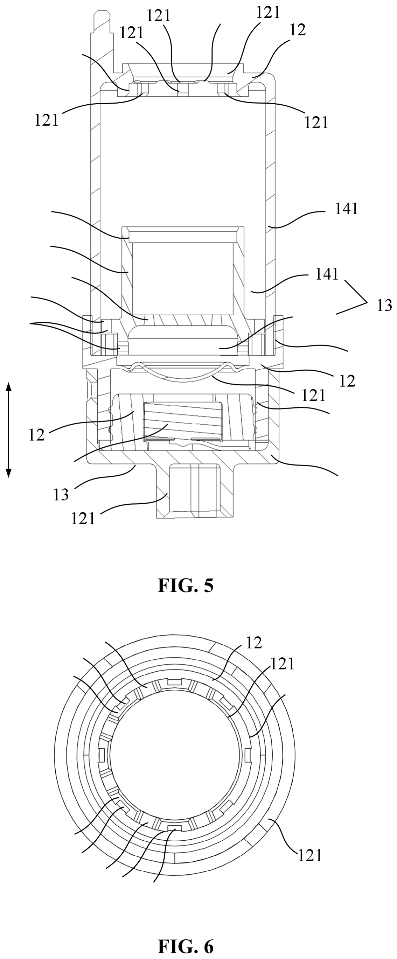

Further, in a specific example, as shown in FIGS. 5 and 6, a diameter of the insertion port 121 is larger than an inner diameter of the heating tube 23, such that when the aerosol passes through the insertion port 121 and is inserted into the heating cavity 21, a side wall of the aerosol-generating rod 500 is not contact with an inner side wall of the insertion port 121, thereby ensuring that an air intake channel is not blocked, and an external airflow flows through any position of the aerosol-generating rod 500 in the circumferential direction, such that an intake airflow flows into the mounting cavity 11 relatively uniformly.

Further, in another specific example, as shown in FIG. 7, in the first direction, a diameter of at least a portion of the insertion port 121 gradually increases from inside to outside, which not only plays a guiding role when the aerosol-generating rod 500 passes through the insertion port 121, but also expands an opening area on an air intake side when the aerosol-generating rod 500 is inserted into the heating cavity 21, thereby facilitating the inward flow of external airflow through a gap between the insertion port 121 and the aerosol-generating rod 500. A cross-sectional shape of an area where the diameter of the insertion port 121 increases may be set as a slope to form a chamfer-like structure, or the cross-sectional shape thereof may be set as an arc to form a rounded-corner-like structure.

In a further embodiment of the present disclosure, as shown in FIG. 8, a flange structure 222 is disposed on an outer side wall of the heating base 22. The flange structure 222 extends along the circumferential direction, and the flange structure 222 abuts against an inner side wall of the support member 1; and the flange structure 222 divides the mounting cavity 11 into an air intake segment 111 and an air guide segment 112, where the air guide segment 112 is located on a side of the flange structure 222 facing the closed end 13 and communicates with the heating cavity 21 through the ventilation hole 221, and the air intake segment 111 is located on a side of the flange structure 222 facing the insertion end 12 and communicates with the air inlet 122. The flange structure 222 is provided with an air guide channel 223, the air guide channel 223 communicates the air intake segment 111 and the air guide segment 112, and gas flowing into the air intake segment 111 from the air inlet 122 enters the air guide segment 112 through the air guide channel 223, and then enters the heating cavity 21 through the ventilation hole 221. Abutting engagement between the flange structure 222 and the support member 1 enables to fix the heating base 22 and the heating tube 23 in a radial direction, such that the heating tube 23 remains accurately positioned, and an airflow passes through the air guide channel 223.

It should be noted that in practical applications, the flange structure 222 may be a continuous structure extending along the circumferential direction, and as shown in FIG. 8, a plurality of flange structures 222 may be arranged at intervals in the circumferential direction to form the air guide channels 223 by using gaps between adjacent flange structures 222.

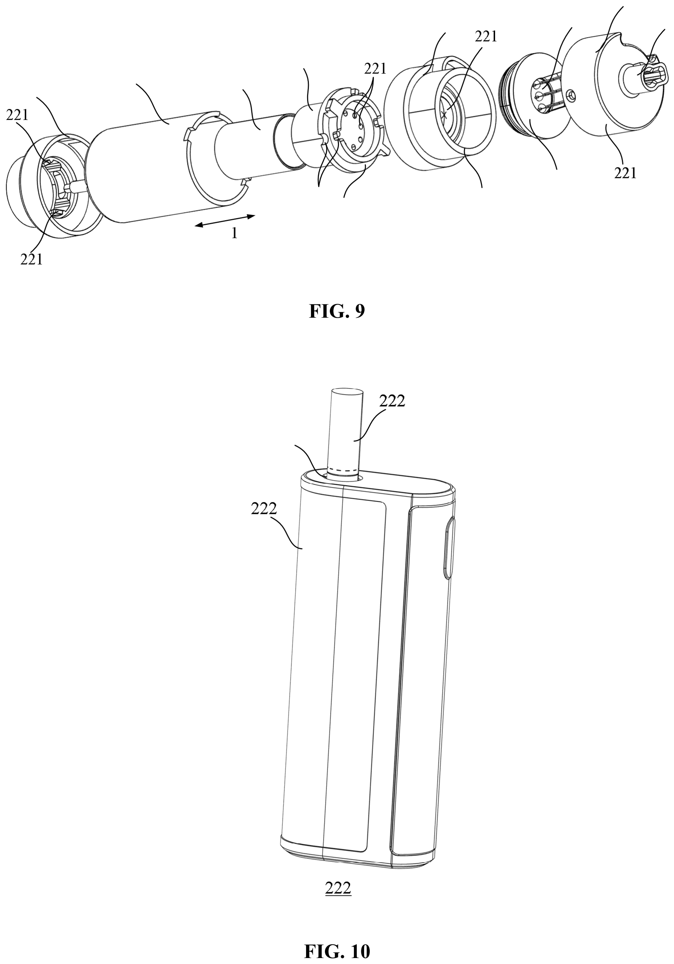

Further, as shown in FIGS. 7, 8, and 9, the heating device 100 further includes a base sealing member 31 and an airflow sensor 32. The base sealing member 31 is disposed in the support member 1 and located on a side of the heating base 22 away from the heating tube 23; the base sealing member 31 is sealingly connected to the flange structure 222 of the heating base 22 and the inner side wall of the support member 1, and the base sealing member 31 has a flexible membrane structure 311; and for example, at a position of the base sealing member 31 shown in FIG. 9 opposite to the closed end 13, the flexible membrane structure 311 and the heating base 22 enclose to form the air guide segment 112, the flexible membrane structure 311 has certain flexibility, and when the air guide segment 112 is subjected to air pressure changes caused by airflow movement, the flexible membrane structure 311 deforms under the action of air pressure. For example, when the user performs an inhalation action on the aerosol-generating rod 500, an airflow in the air guide segment 112 is inhaled into the heating cavity 21, such that negative pressure is generated in the air guide segment 112, and the flexible membrane structure 311 deforms under the action of negative pressure and moves toward a direction close to the heating base 22, which drives the airflow movement on the other side of the flexible membrane structure 311 away from the heating base 22.

Correspondingly, as shown in FIG. 9, the airflow sensor 32 is disposed in the support member 1 and located on a side of the flexible membrane structure 311 away from the heating base 22 and configured to sense airflow movement. When the flexible membrane structure 311 deforms, airflow movement is driven on the side of the flexible membrane structure 311 away from the heating base 22, and the airflow sensor 32 senses the airflow movement and generates a sensing signal. When applied to an atomization device, the airflow sensor 32 is configured to be communicatively connected to a power supply assembly 420 to transmit a sensing signal to the power supply assembly 420, and the power supply assembly 420 controls a power supply state of the heating assembly 2 according to the sensing signal.

In a further embodiment of the present disclosure, as shown in FIG. 8, the support member 1 has a split structure, including a first support sub-segment 141 and a second support sub-segment 142; the first support sub-segment 141 and the second support sub-segment 142 are sequentially arranged in the first direction and are detachably connected to each other; and the insertion end 12 is formed at an end of the first support sub-segment 141 away from the second support sub-segment 142, and the closed end 13 is formed at an end of the second support sub-segment 142 away from the first support sub-segment 141. During the production and manufacturing process, the heating assembly 2 may be first assembled in the mounting cavity 11, and then the first support sub-segment 141 and the second support sub-segment 142 are connected and assembled to facilitate disassembly and assembly. On the second support sub-segment 142, an outer end face of the closed end 13 is provided with a connecting structure 131, and when assembled in the atomization device, the second support sub-segment 142 may be connected and fixed to a bracket structure in the atomization device through the connecting structure 131 to achieve the connection and assembly of the heating device 100 and the atomization device.

In a further embodiment of the present disclosure, as shown in FIG. 9, the heating device 100 further includes a fixing sleeve 34, and the fixing sleeve 34 is disposed at the insertion end 12 of the support member 1 and connected to the support member 1; the fixing sleeve 34 is a structure penetrating in the first direction and arranged corresponding to the insertion port 121 of the support member 1; and an inner side wall of the fixing sleeve 34 is provided with contact structures 341, and when the aerosol-generating rod 500 penetrates into the fixing sleeve 34, the contact structures 341 are in abutting engagement with the side wall of the aerosol-generating rod 500 to fix the aerosol-generating rod 500. The contact structures 341 may be arranged at intervals in the circumferential direction, and gas flows through a space between adjacent contact structures 341. Preferably, each of the contact structures 341 is a flexible structure, such as a silicone structure, which increases friction with a contact surface of the aerosol-generating rod 500 and prevents accidental detachment of the aerosol-generating rod 500 during use. Furthermore, the fixing sleeve 34 entirely has a silicone structure, and the fixing sleeve 34 is assembled and fixed to a housing of the atomization device through abutting engagement between an end face of the fixing sleeve and the housing.

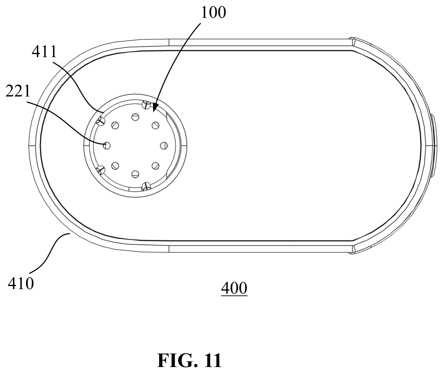

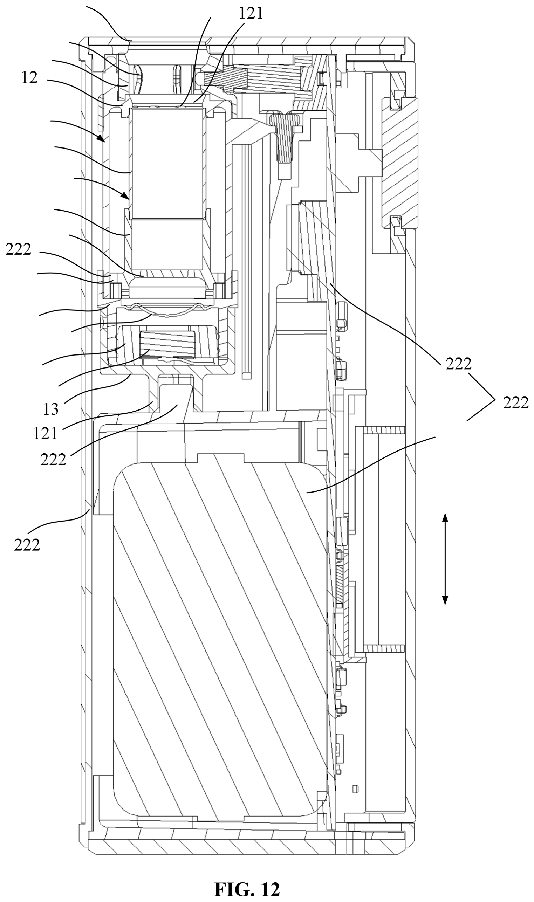

In an embodiment of the second aspect of the present disclosure, an atomization device 400 is provided, and as shown in FIGS. 10, 11, 12, and 13, the atomization device 400 includes a housing 410, and the heating device 100 and the power supply assembly 420 according to any one of the embodiments of the first aspect. An end of the housing 410 in the first direction is provided with an assembly port 411, and for example, the assembly port 411 is disposed at a top end of the housing 410 shown in FIG. 12; both the heating device 100 and the power supply assembly 420 are disposed in the housing 410; and the insertion port 121 of the heating device 100 is arranged corresponding to the assembly port 411, such that the heating cavity 21 of the heating assembly 2 communicates with the assembly port 411, and the aerosol-generating rod 500 may be inserted into the heating cavity 21 of the heating assembly 2 through the assembly port 411. The power supply assembly 420 is electrically connected to the heating assembly 2 of the heating device 100 to supply power to the heating assembly 2 such that the heating tube generates heat, and the aerosol-generating rod 500 inserted into the heating cavity 21 is heated.

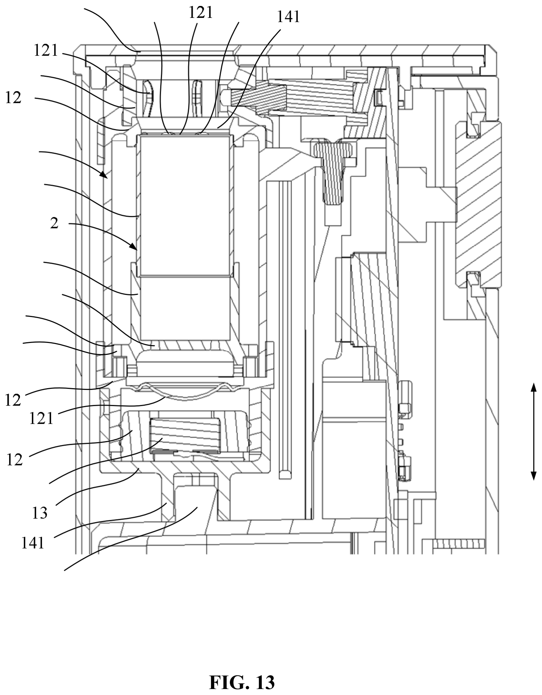

As shown in FIGS. 5 and 13, an end of the heating assembly 2 away from the insertion end 12 of the support member 1 is provided with the ventilation hole 221, the air inlet 122 communicating with the mounting cavity 11 is disposed between the insertion end 12 of the support member 1 and an end face of the heating assembly 2 that abuts against the insertion end, and when the aerosol-generating rod 500 is inserted into the heating cavity 21 through the assembly port 411, an external airflow enters through a gap between the assembly port 411 and the aerosol-generating rod 500, and enters the mounting cavity 11 (i.e., a cavity between the support member 1 and the heating assembly 2) after passing through the air inlet 122 on the support member 1, where an intake airflow with a lower temperature dissipates heat from the insertion end 12 of the support member 1, absorbs part of the heat dissipated by the heating assembly 2, and carries the absorbed heat into the heating cavity 21 for heating the aerosol-generating rod 500, thereby achieving energy recovery and local cooling.

A specific example of the atomization device 400 of the present disclosure is described below with reference to the accompanying drawings.

As shown in FIGS. 1 and 10 to 13, the atomization device 400 is specifically a heat-not-burn device, and the housing 410 is assembled by a plurality of sub-housings to facilitate the assembly of various internal components. The assembly port 411 is disposed at a top of the housing 410, the housing 410 is internally provided with a bracket structure 412, the bracket structure 412 divides an internal space of the housing 410 into two different chambers, the heating device 100 is disposed in the chamber above the bracket structure 412, and the power supply assembly 420 is disposed in the chamber below the bracket structure 412.

As shown in FIGS. 1, 5, 11, 12, and 13, the heating device 100 includes a support member 1, a heating assembly 2, a base sealing member 31, an airflow sensor 32, and a fixing sleeve 34; the support member 1 is made of a PEEK material and includes a first support sub-segment 141 and a second support sub-segment 142 sequentially arranged in the first direction; and the heating assembly 2 includes a heating base 22 and a heating tube 23.

Specifically, the support member 1 has a hollow cylindrical structure and is internally provided with a mounting cavity 11, the first support sub-segment 141 is located above the second support sub-segment 142, an insertion end 12 with a circular insertion port 121 is disposed at a top end of the first support sub-segment 141, a closed end 13 is disposed at a bottom of the second support sub-segment 142, an outer end face of the closed end 13 is provided with a connecting structure 131, and the second support sub-segment 142 is connected and fixed to the bracket structure 412 through the connecting structure 131. The fixing sleeve 34 is connected to a top of the first support sub-segment 141 and communicates with the insertion port 121 and the assembly port 411, and the fixing sleeve 34 is snap-fitted and fixed to the housing 410 and the first support sub-segment 141 respectively; and a plurality of contact structures 341 made of a silicone material are arranged at intervals on an inner side wall of the fixing sleeve 34 in the circumferential direction.

The base sealing member 31 is disposed at a junction between the first support sub-segment 141 and the second support sub-segment 142; an end of the base sealing member 31 facing the first support sub-segment 141 is provided with a first insertion slot 312, and an end of the base sealing member 31 facing the second support sub-segment 142 is provided with a second insertion slot 313, where the second insertion slot 313 is inserted into the second support sub-segment 142 and sealingly assembled with an inner side wall of the second support sub-segment 142; an end of the first support sub-segment 141 facing the second support sub-segment 142 is inserted into the first insertion slot 312 and sealingly assembled with an inner side wall of the first insertion slot 312; a sensor support 33 made of a silicone material is further disposed in the second insertion slot 313, the sensor support 33 has an opening, and an airflow sensor is fixed in the sensor support 33; and a flexible membrane structure 311 is disposed at a position of the base sealing member 31 corresponding to a sensor.

The heating base 22 of the heating assembly 2 is located in the first support sub-segment 141 close to the base sealing member 31 and is in snap-fit engagement with the base sealing member 31; and the heating base 22 has a hollow structure with a through top, a bottom wall of the heating base is provided with a plurality of ventilation holes 221, a top end of the heating base 22 is provided with a second mounting groove 224, a bottom end of the heating tube 23 is inserted into the second mounting groove 224 of the heating base 22 to form an abutment effect, and an internal space of the heating tube 23 and an internal space of the heating base 22 collectively form a heating cavity 21. An outer side wall of the heating base 22 is provided with a circular flange structure 222, the flange structure 222 is sealingly fitted with an inner side wall of the first support sub-segment 141 and divides the mounting cavity 11 into an air intake cavity and an air guide cavity, the flange structure 222 is provided with an air guide channel 223 communicating the air intake cavity and the air guide cavity, and the base sealing member 31 is provided with an airway structure corresponding to the air guide channel 223.

An inner end of the insertion end 12 is provided with a first mounting groove 124, a bottom wall of the first mounting groove 124 is provided with a plurality of first protrusion structures 123 arranged at intervals in the circumferential direction, and an inner side wall of the first mounting groove 124 is provided with a plurality of second protrusion structures 125 arranged at intervals in the circumferential direction. A top end of the heating tube 23 is inserted into the first mounting groove 124 and abuts against the plurality of first protrusion structures 123, and an outer side wall of the heating tube 23 abuts against the plurality of second protrusion structures 125. In the circumferential direction, a gap space between any two adjacent first protrusion structures 123 forms an air inlet 122, and the second protrusion structures 125 are arranged corresponding to the first protrusion structures 123 and connected to the corresponding first protrusion structures 123 in the first direction. In the circumferential direction, a size of the second protrusion structure 125 is smaller than a size of the first protrusion structure 123, and in a direction toward the closed end 13 along the first direction, a flow area of the air inlet 122 gradually increases; and additionally, a diameter of the insertion port 121 of the insertion end 12 is larger than an inner diameter of the heating tube 23, and in the first direction, a diameter of an upper segment area of the insertion port 121 gradually increases from inside to outside.

The power supply assembly 420 includes a battery 421 and an electronic control board 422, the electronic control board 422 is provided with a control circuit and is electrically connected to the battery 421 and the heating tube 23 of the heating assembly 2, and the electronic control board 422 is communicatively connected to the airflow sensor 32 to control an energization state of the heating tube 23.

When the aerosol-generating rod 500 is inserted into the heating cavity 21 through the assembly port 411, the contact structures 341 of the fixing sleeve 34 abut against an outer side wall of the aerosol-generating rod 500 to position and fix the aerosol-generating rod 500; and when the user performs an inhalation action on the aerosol-generating rod 500, negative pressure is generated in the air guide cavity to cause deformation of the flexible membrane structure 311, the flexible membrane structure 311 drives the airflow movement on a side of the airflow sensor 32, such that the airflow sensor 32 generates a sensing signal, and the electronic control board 422 controls the battery 421 to supply power to the heating tube 23 according to the sensing signal such that the heating tube 23 generates heat, thereby heating the aerosol-generating rod 500, such that an atomization substrate therein is heated and atomized to generate aerosol. An area of the aerosol-generating rod 500 where the atomization substrate is stored is close to a bottom of the heating cavity 21, and after passing through the assembly port 411 and the insertion port 121, an external airflow enters an air intake segment 111 of the mounting cavity 11 through the plurality of air inlets 122 at a top of the heating tube 23, flows to an air guide segment 112 along the first direction, then enters the heating cavity 21 through the ventilation hole 221, and is inhaled into the aerosol-generating rod 500 to carry the formed aerosol to an inhalation end. Through heat exchange with an intake airflow with a lower temperature, part of the heat from the insertion end 12 and the top of the heating tube 23 is absorbed to lower the temperature of the insertion end 12 and prolong the service life, and the airflow carries the absorbed heat into the heating cavity 21 for heating the aerosol-generating rod 500, thereby achieving energy recovery and utilization, reducing energy consumption, and improving heating efficiency.

Additionally, the atomization device 400 in this embodiment has all the beneficial effects of the heating device 100 in any of the above embodiments, which will not be further described in detail herein.

The above specific examples are applied to describe the present disclosure, are only intended to help understand the present disclosure, and are not intended to limit the present disclosure. For those skilled in the art to which the present disclosure belongs, several simple deductions, modifications, or substitutions may also be made according to the ideas presented in the present disclosure.

## Claims

1. A heating device (100), comprising:
a support member (1), wherein the support member (1) is internally provided with a mounting cavity (11), the mounting cavity (11) is provided with an insertion end (12) and a closed end (13) oppositely arranged in a first direction (F1), and the insertion end (12) is provided with an insertion port (121) penetrating in the first direction (F1);
and a heating assembly (2), wherein the heating assembly (2) is disposed in the mounting cavity (11), and the heating assembly (2) is internally provided with a heating cavity (21) capable of accommodating an aerosol-generating rod (500) and configured to heat the aerosol-generating rod (500) inserted into the heating cavity (21);
in the first direction (F1), one end of the heating assembly (2) abuts against the insertion end (12), the insertion port (121) communicates the heating cavity (21) with an external atmosphere, the other end of the heating assembly (2) is provided with a ventilation hole (221), and the ventilation hole (221) communicates the heating cavity (21) with the mounting cavity (11); and
an air inlet (122) is disposed between the insertion end (12) and an end face of the heating assembly (2) that abuts against the insertion end, and the air inlet (122) communicates with the mounting cavity (11).

2. The heating device (100) according to claim 1, wherein
the heating assembly (2) comprises:
a heating base (22), wherein the heating base (22) is connected to the support member (1), and the heating base (22) is provided with the ventilation hole (221);
and a heating tube (23), wherein the heating tube (23) is disposed in the first direction (F1), one end of the heating tube (23) abuts against the heating base (22), the heating tube (23) and the heating base (22) enclose to form the heating cavity (21), the other end of the heating tube (23) abuts against the insertion end (12), and the heating tube (23) generates heat in an energized state to heat the aerosol-generating rod (500) inserted into the heating cavity (21); and
an end of the insertion end (12) facing the heating tube (23) is provided with a plurality of first protrusion structures (123), the plurality of first protrusion structures (123) are arranged at intervals in a circumferential direction and all abut against an end face of the heating tube (23), and one air inlet (122) is formed between any two adjacent first protrusion structures (123).

3. The heating device (100) according to claim 2, wherein
an end of the insertion end (12) facing the heating tube (23) is further provided with a first mounting groove (124), a side wall of the first mounting groove (124) is located outside the first protrusion structures (123), and an inner side wall of the first mounting groove (124) is provided with a plurality of second protrusion structures (125); and
an end of the heating tube (23) facing the insertion end (12) extends into the first mounting groove (124) and abuts against the plurality of first protrusion structures (123), an outer side wall of the heating tube (23) abuts against the plurality of second protrusion structures (125), and in the circumferential direction of the first mounting groove (124), each of the air inlets (122) corresponds to a gap between two adjacent second protrusion structures (125).

4. The heating device (100) according to claim 3, wherein
the second protrusion structures (125) are arranged corresponding to the first protrusion structures (123) and connected to the corresponding first protrusion structures (123) in the first direction (F1); and
in the circumferential direction of the first mounting groove (124), a size of the second protrusion structure (125) is not larger than a size of the corresponding first protrusion structure (123).

5. The heating device (100) according to claim 3, wherein
in a direction toward the closed end (13) along the first direction (F1), a flow area of the air inlet (122) gradually increases.

6. The heating device (100) according to claim 2, wherein
a diameter of the insertion port (121) is larger than an inner diameter of the heating tube (23); and/or
in the first direction (F1), a diameter of at least a portion of the insertion port (121) gradually increases from inside to outside.

7. The heating device (100) according to claim 2, wherein
an outer side wall of the heating base (22) is provided with a flange structure (222) arranged in the circumferential direction, and the flange structure (222) abuts against an inner side wall of the support member (1) and divides the mounting cavity (11) into an air intake segment (111) and an air guide segment (112);
the air guide segment (112) is located on a side of the flange structure (222) facing the closed end (13), and the air intake segment (111) is located on a side of the flange structure (222) facing the insertion end (12); and
the flange structure (222) is provided with an air guide channel (223) communicating the air intake segment (111) and the air guide segment (112).

8. The heating device (100) according to claim 7, further comprising:
a base sealing member (31), wherein the base sealing member (31) is disposed in the support member (1) and located on a side of the heating base (22) away from the heating tube (23), the base sealing member (31) is sealingly connected to the flange structure (222) and the inner side wall of the support member (1), the base sealing member (31) has a flexible membrane structure (311), the flexible membrane structure (311) and the heating base (22) enclose to form the air guide segment (112), and the flexible membrane structure (311) deforms under the action of air pressure; and
an airflow sensor (32), wherein the airflow sensor (32) is disposed in the support member (1) and located on a side of the flexible membrane structure (311) away from the heating base (22), the airflow sensor (32) is configured to sense air pressure change generated when the flexible membrane structure (311) deforms and generate a corresponding sensing signal, and the airflow sensor (32) is configured to be communicatively connected to a power supply assembly (420).

9. The heating device (100) according to claim 1, wherein
the support member (1) comprises a first support sub-segment (141) and a second support sub-segment (142) sequentially arranged in the first direction (F1), the first support sub-segment (141) is detachably connected to the second support sub-segment (142), the insertion end (12) is formed at an end of the first support sub-segment (141) away from the second support sub-segment (142), the closed end (13) is formed at an end of the second support sub-segment (142) away from the first support sub-segment (141), an outer end face of the closed end (13) is provided with a connecting structure (131), and the connecting structure (131) is configured to connect and fix a bracket structure (412) of the atomization device (400); and/or
the heating device (100) further comprises a fixing sleeve (34), the fixing sleeve (34) is connected to the insertion end (12) of the support member (1) and communicates with the insertion port (121), an inner side wall of the fixing sleeve (34) is provided with contact structures (341), and the contact structures (341) are configured to abut against a side wall of the aerosol-generating rod (500) inserted into the heating cavity (21).

10. An atomization device (400), comprising:
a housing (410), wherein an end of the housing (410) in the first direction (F1) is provided with an assembly port (411);
the heating device (100) according to any one of claims 1-9, wherein the heating device (100) is disposed in the housing (410), and the insertion port (121) of the heating device (100) is arranged corresponding to the assembly port (411); and
a power supply assembly (420), wherein the power supply assembly (420) is disposed in the housing (410) and electrically connected to the heating assembly (2) of the heating device (100).
